# EUROPÄISCHE PATENTANMELDUNG

(11) **EP 2 045 017 A1**
(43) Veröffentlichungstag der Anmeldung: **08.04.2009**
(21) Anmeldenummer: 08016669.7
(22) Anmeldetag: 23.09.2008
(51) Int. Cl.: B03D 1/14, D21F 1/70

(54) **Flotationsvorrichtung und Flotationsverfahren zur Entfernung von Störstoffen aus einer wässrigen Feststoffsuspension**

(30) Priorität: 03.10.2007 AT 15582007
(71) Anmelder: Andritz AG, 8045 Graz (AT)
(72) Erfinder: Gscheider, Alexander, Dipl.-Ing., 8785 Hohentauern (AT); Hoppl, Friedrich, 8225 Pöllau b. Hartberg (AT); Glawogger, Josef, 8151 Hitzendorf (AT)
(74) Vertreter: Schweinzer, Friedrich

(57) **Zusammenfassung**

Flotationsvorrichtung und Flotationsverfahren zur Entfernung von Störstoffen aus einer wässrigen Feststoffsuspension (S) mittels Bildung einer störstoffbehafteten Schaumfraktion durch Gaseintrag mit einem Flotationsbehälter (1), der einen Suspensionseinlass (5), einen Suspensionsauslass (6), sowie eine Sammeleinrichtung für die Schaumfraktion aufweist, bei der erfindungsgemäß vorgesehen ist, dass der Suspensionseinlass (5) durch eine Fallhöhe (H) der Feststoff-suspension (S) in den Flotationsbehälter (1) gebildet wird. Dabei ist vorzugsweise eine Abfolge von zumindest zwei Flotationsbehältern (1) vorgesehen, wobei bei zumindest einem Flotationsbehälter (1 b) der Suspensionseinlass (5) durch eine Fallhöhe (H) der Feststoffsuspension (S) aus dem Suspensionsauslass (6) des vorhergehenden Flotationsbehälters (1a) gebildet wird.

## Beschreibung

Die Erfindung betrifft eine Flotationsvorrichtung zur Entfernung von Störstoffen aus einer wässrigen Feststoffsuspension mittels Bildung einer störstoffbehafteten Schaumfraktion durch Gaseintrag mit einem Flotationsbehälter, der einen Suspensionseinlass, einen Suspensionsauslass, sowie eine Sammeleinrichtung für die Schaumfraktion aufweist. Die Erfindung betrifft weiters ein Flotationsverfahren zur Entfernung von Störstoffen aus einer im Normalfall wässrigen Feststoffsuspension, sehr wohl ist das Verfahren auch mit anderen Flüssigkeiten anwendbar, bei dem Luftblasen zunächst mit dem Schwerefeld eingebracht werden, die dann in dem (den) Flotationsbehälter(n) entgegen dem Schwerefeld innerhalb der Feststoffsuspension aufsteigen, wobei die Störstoffe an die Flotationsblasen angelagert und in einer Schaumfraktion gesammelt und ausgetragen werden.

Vorrichtungen und Verfahren der genannten Art werden verwendet, um aus einer Feststoffsuspension die im Flotationsmedium, zumeist Wasser, suspendierten Störstoffe auszuscheiden. Es handelt sich dabei um eine physikalische Trennmethode, bei der unterschiedliche Hydrophobien der im Wasser suspendierten Feststoffe ausgenutzt werden. Hierzu wird in die Feststoffsuspension ein Gas, zumeist Luft, durch Lanzen oder Rührer eingetragen. Dabei entstehen Flotationsblasen, deren Bildung durch Zusatzstoffe, etwa Tenside oder Schaumstabilisatoren, unterstützt werden kann. Eine Fraktion der suspendierten Feststoffe verfügt über eine vergleichsweise höhere Hydrophobie, als andere Fraktionen der Feststoffsuspension, und neigt daher dazu, die Wasserphase zu verlassen und sich an den Flotationsblasen anzulagern. Diese Fraktion umfasst die im Folgenden als Störstoffe bezeichneten Feststoffe. Jene Feststoff-Fraktionen mit höherer Hydrophilie verbleiben hingegen in der Wasserphase. Die Flotationsblasen steigen aufgrund der Auftriebskraft innerhalb der wässrigen Feststoffsuspension entgegen dem Schwerefeld auf, und bilden an der Oberfläche der Feststoffsuspension eine störstoffbehaftete Schaumfraktion, die gesammelt und ausgetragen werden kann.

Flotationsvorrichtungen bzw. -verfahren dieser Art stellen eine einfache und effektive Trennmethode dar, und werden vielfach eingesetzt, etwa in der Klärtechnik, oder der Erzanreicherung. Ein besonders interessantes Anwendungsgebiet für die Flotationstechnik hat sich in der Altpapieraufarbeitung ergeben, wobei sie in diesem Fall zur Entfernung von Druckfarben partikel aus einer Faserstoffsuspension eingesetzt wird.

Die für die Flotation notwendigen Flotationsblasen werden hauptsächlich durch selbstansaugende Injektoren oder mittels Pressluft in der Feststoffsuspension erzeugt. Die Entfernung der Störstoffe findet durch wiederholtes Be- und Entlüften der Feststoffsuspension mit jeweiligem Schaumaustrag statt. Dabei ist es in der Regel notwendig, große Volumenströme umzuwälzen, da bei Konsistenzen der Feststoffsuspension von etwa 1 % gearbeitet werden muss. Das erfordert entsprechende Umwälzpumpen (heute muss bereits mit Umwälzmengen von >80000 l/min gerechnet werden) mit entsprechendem Energieverbrauch, Verschleiß und Wartung. Des Weiteren zeigt sich in der Praxis, dass die Düsen der Injektoren leicht verstopfen können die üblicher Weise nur im Stillstand zu reinigen sind, und sich auch Probleme mit einer ausreichenden Durchmischung der Feststoffsuspension ergeben können.

Es ist daher das Ziel der Erfindung, diese Nachteile zu vermeiden und eine Flotationsvorrichtung sowie ein Flotationsverfahren zu verwirklichen, bei dem auf die Verwendung von Umwälzpumpen weitestgehend verzichtet werden kann, um so den Energieverbrauch zu verringern. Des Weiteren soll der Wartungsaufwand und somit die Stillstandszeit entsprechender Flotationsanlagen verringert werden. Dabei sollen mit vergleichsweise geringem Aufwand auch große Mengen des Flotationsmediums bewältigt werden können.

Diese Ziele werden durch die Merkmale von Anspruch 1 und 12 erreicht. Anspruch 1 bezieht sich auf eine Flotationsvorrichtung zur Entfernung von Störstoffen aus einer wässrigen Feststoffsuspension mittels Bildung einer störstoffbehafteten Schaumfraktion durch Gaseintrag mit einem Flotationsbehälter, der einen Suspensionseinlass, einen Suspensionsauslass, sowie eine Sammeleinrichtung für die Schaumfraktion aufweist. Erfindungsgemäß ist bei einem solchen Flotationsbehälter vorgesehen, dass der Suspensionseinlass durch eine Fallhöhe der Feststoffsuspension in den Flotationsbehälter gebildet wird. Der für die Bildung der Flotationsblasen erforderliche Lufteintrag wird somit lediglich durch freien Fall der Feststoffsuspension in den Flotationsbehälter und deren Eindringen in die Feststoffsuspension im Flotationsbehälter sichergestellt.

Je nach Anwendungsfall kann es aber sein, dass der auf diese Weise erzielte Lufteintrag noch nicht ausreichend ist, um einen erforderlichen Abtrennungsgrad der Störstoffe zu erreichen. Daher sieht Anspruch 2 vor, dass eine Abfolge von zumindest zwei Flotationsbehältern vorgesehen ist, wobei bei zumindest einem Flotationsbehälter der Suspensionseinlass durch eine Fallhöhe der Feststoff-suspension aus dem Suspensionsauslass des vorhergehenden Flotationsbehälters gebildet wird. Die Flotationsbehälter können dabei nebeneinander, oder auch übereinander angeordnet werden, wobei sich die einzelnen Flotationsbehälter jeweils auf unterschiedlicher Höhe befinden, um die erfindungsgemäß erforderliche Fallhöhe der Feststoffsuspension von einem Flotationsbehälter in den nachfolgenden Flotationsbehälter sicher zu stellen.

Anspruch 3 schlägt vor, dass im Bereich der Fallhöhe eine Leiteinrichtung, beispielsweise Leitrinne, Leitrohr, Leitkanal o.dgl. zur Führung der Feststoffsuspension in den Flotationsbehälter vorgesehen ist. Damit kann ein kontrollierter Eintrag der Feststoffsuspension in den Flotationsbehälter erfolgen. Gemäß Anspruch 4 ist die Neigung der Leitrinne verstellbar. Damit kann etwa erreicht werden, dass die Feststoffsuspension beim Einleiten aus einem Vorlagebehälter oder einem vorhergehenden Flotationsbehälter nicht einfach an der Behälterwand des betreffenden Flotationsbehälters entlang rinnt, sondern von der Behälterwand beabstandet im freien Fall auf die bereits im Behälter befindliche Feststoffsuspension auftrifft. Dadurch wird der Lufteintrag erhöht.

Weist gemäß Anspruch 5 die Leiteinrichtung Störelemente zur Beeinträchtigung einer laminaren Strömung der Feststoffsuspension entlang der Leiteinrichtung auf, so wird der Lufteintrag weiter erhöht. Die Störelemente können dabei gemäß Anspruch 6 durch Oberflächenerhöhungen und -vertiefungen der Leiteinrichtung, oder gemäß Anspruch 7 durch Durchbrüche in der Leiteinrichtung gebildet werden. Die geometrische Form dieser Erhöhungen/Vertiefungen kann dabei je nach Anwendungsfall beliebig gewählt werden. Auch die Maßnahme nach Anspruch 8 erhöht den Lufteintrag, indem die Leiteinrichtung auf ihrer dem Flotationsbehälter zugewandten Seite eine gezackte Abschlusskante aufweist.

Anspruch 9 bezieht sich auf die Sammeleinrichtung und schlägt vor, dass die Sammeleinrichtung durch zwei beidseits im oberen Bereich des Flotationsbehälters angeordnete und entlang der Strömungsrichtung der Feststoffsuspension vom Suspensionseinlass zum Suspensionsauslass verlaufende Sammelrinnen umfasst. Die Sammeleinrichtung kann des Weiteren gemäß Anspruch 10 einen im oberen Bereich des Flotationsbehälters im Bereich des Suspensionsauslasses angeordneten Verdrängkörper umfassen.

Anspruch 11 bezieht sich auf einen besonders bevorzugten Anwendungsfall der erfindungsgemäßen Flotationsvorrichtung in der Aufbereitung von Altpapier, wobei es sich bei der Feststoffsuspension um eine Faserstoffsuspension handelt, und bei den Störstoffen um Druckfarbenpartikel sowie andere im Altpapier vorkommende hydrophobe Partikel.

Anspruch 12 sieht vor, dass die Flotationsbehälter der Abfolge von zumindest zwei Flotationsbehältern turmartig übereinander angeordnet sind, wodurch eine besonders platz sparende Bauweise ermöglicht wird.

Anspruch 13 bezieht sich schließlich auf ein Flotationsverfahren zur Entfernung von Störstoffen aus einer wässrigen Feststoffsuspension, bei dem Flotationsblasen gebildet werden, die in einem Flotationsbehälter entgegen dem Schwerefeld innerhalb der wässrigen Feststoffsuspension aufsteigen, wobei die Störstoffe an die Flotationsblasen angelagert und in einer Schaumfraktion gesammelt und ausgetragen werden. Erfindungsgemäß ist hierbei vorgesehen, dass die Flotationsblasen durch eine Fallhöhe der Feststoffsuspension in den Flotationsbehälter erzeugt werden. Da es wiederum sein kann, dass die auf diese Weise erzielten Flotationsblasen noch nicht ausreichend sind, um einen erforderlichen Abtrennungsgrad der Störstoffe zu erreichen, kann gemäß Anspruch 14 vorgesehen sein, dass die Feststoffsuspension eine Abfolge von zumindest zwei Flotationsbehältern durchläuft, wobei bei zumindest einem Flotationsbehälter die Flotationsblasen durch eine Fallhöhe der Feststoffsuspension aus dem Suspensionsauslass des vorhergehenden Flotationsbehälters erzeugt werden. Anspruch 15 bezieht sich wiederum auf einen besonders bevorzugten Anwendungsfall des erfindungsgemäßen Flotationsverfahrens in der Aufbereitung von Altpapier, wobei es sich bei der Feststoffsuspension um eine Faserstoffsuspension handelt, und bei den Störstoffen um Druckfarbenpartikel bzw. andere im Altpapier vorkommende hydrophobe Partikel.

Ausführungsformen der Erfindung werden im Folgenden anhand der beiliegenden Zeichnungen näher erläutert. Hierbei zeigen die
Fig. 1 eine schematische Ansicht einer Ausführungsform einer erfindungsgemäßen Flotationsvorrichtung,
Fig. 2 eine Ansicht eines Flotationsbehälters nach Fig. 1 von oben gesehen,
Fig. 3 eine vergrößerte Ansicht der ersten Stufe der Flotationsvorrichtung gemäß Fig. 1,
Fig. 4 eine vergrößerte Ansicht des Suspensionseinlasses des ersten Flotationsbehälters der Vorrichtung gemäß Fig. 1,
Fig. 5 eine Ausführungsform der Leitrinne,
Fig. 6 eine weitere Ausführungsform der Leitrinne, und
Fig. 7 eine schematische Darstellung einer Turmbauweise der Flotationsbehälter.

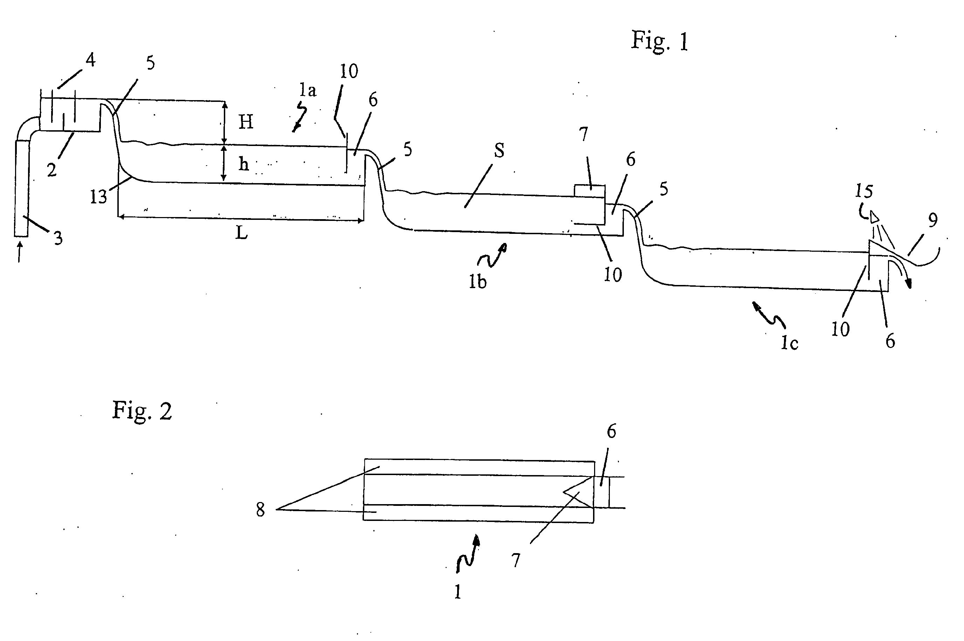

In der Fig. 1 ist eine schematische Ansicht einer Ausführungsform einer erfindungsgemäßen Flotationsvorrichtung dargestellt, die im gegebenen Beispiel eine Abfolge von drei Flotationsbehälter 1 a, 1b, 1 c umfasst. Dieser Abfolge von Flotationsbehältern 1a, 1b, 1c ist ein Vorlagebehälter 2 vorangestellt, in den etwa mithilfe einer Pumpeinrichtung 3 eine Feststoffsuspension S eingebracht wird. Die Feststoffsuspension S beinhaltet etwa Faserstoffe, sowie Störstoffe wie z.B. Druckfarbenpartikel. Das Flotationsmedium, in dem diese Feststoffe suspendiert sind, wird in der Regel Wasser sein, es könnten aber auch andere Medien wie etwa Öl oder spezielle Lösungsmittel verwendet werden. Im Folgenden wird allgemein von einer wässrigen Feststoffsuspension S ausgegangen. Des Weiteren kann die Feststoffsuspension S noch Zusatzstoffe, etwa Tenside oder Schaumstabilisatoren, enthalten, um in den nachfolgenden Anlagenabschnitten die Schaumbildung zu erleichtern. Im Vorlagebehälter 2 können Leitbleche 4 angeordnet sein, um die Feststoffsupension S zu beruhigen und einen gleichmäßigen Einlauf in den Flotationsbehälter zu gewährleisten.

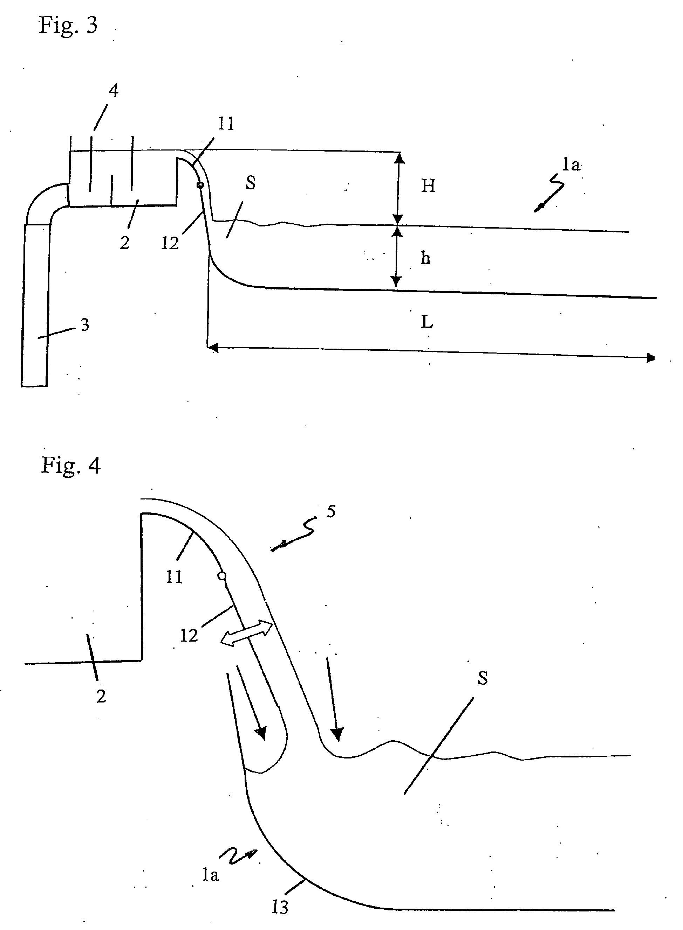

An den Vorlagebehälter 2 schließt der Suspensionseinlass 5 des ersten Flotationsbehälters 1 a an, der in den Fig. 3 und 4 vergrößert dargestellt ist. Der Suspensionseinlass 5 kann auf unterschiedliche Weise verwirklicht werden, es ist dabei aber wesentlich, dass eine Fallhöhe H der Feststoffsuspension in den Flotationsbehälter 1 verwirklicht wird, wobei der Lufteintrag auf dieser Fallhöhe H in die Feststoffsuspension S maximiert werden soll. Je größer nämlich die Menge an dispergierter Luft ist, desto mehr Flotationsblasen können in der Feststoffsuspension S im Zuge des Auftreffens auf die bereits im Flotationsbehälter 1 a befindliche Feststoffsuspension S gebildet werden.

In der Fig. 3 ist eine Ausführungsform des Suspensionseinlasses 5 dargestellt, bei der eine Überlaufrinne 11, sowie eine daran anschließende Leitrinne 12 vorgesehen ist, wobei die Leitrinne 12 mit der Behälterwand des Flotationsbehälters 1 a dicht weitestgehend dicht abschließt. Bei ausreichender Füllstandshöhe im Vorlagebehälter 2 wird die Feststoffsuspension S über die Überlaufrinne 11 und die Leit-rinne 12 in den Flotationsbehälter 1 a fließen, wobei sie entlang der Fallhöhe H einem Wasserfall ähnlich in den Flotationsbehälter 1a fällt. Dabei wird Luft mitgerissen, die durch das Eintauchen der einfließenden Feststoffsuspension S in die bereits im Flotationsbehälter 1a befindliche Feststoffsuspension S eingebracht wird.

Je größer die Fallhöhe H gewählt wird, desto höher ist die Eintrittsgeschwindigkeit der Suspension in den nachfolgenden Flotationsbehälter und desto höher auch die dabei in den Flotationsbehälter eingetragene Luftmenge. Da es für den Flotationsprozess eine optimale Luftmenge und Blasengröße gibt, gibt es je nach Anwendungsfall eine optimale Fallhöhe H, die entweder rechnerisch oder durch Versuche zu ermitteln ist. Der Lufteintrag wird aber auch von der Zusammensetzung der Feststoffsuspension S, deren Temperatur, oder auch von der Verwirklichung zusätzlicher Maßnahmen, wie etwa der Form des Überlaufwehrs 11, wobei es sich hier auch um Rohre verschiedenster Querschnitte handeln kann und Leitrinne 12, abhängen, wie im Folgenden noch näher erläutert werden wird. Die optimale Fallhöhe H wird somit im konkreten Anwendungsfall festzulegen sein.

Der Füllstand h im Flotationsbehälter 1a wird wiederum auf die Fallhöhe H abgestimmt sein. Je höher nämlich die Fallhöhe H gewählt wird, desto tiefer wird die einfließende Feststoffsuspension S die Flotationsblasen in den Flotationsbehälter 1 a verschleppen, wobei der Füllstand h so gewählt werden wird, dass sie die maximale Eintauchtiefe nur geringfügig überschreitet. Dadurch wird eine gute Durchmischung der Feststoffsuspension S im Flotationsbehälter 1 a mit der eingebrachten Luft erreicht. Der Füllstand h bestimmt wiederum die Höhe des Flotationsbehälters 1 a sowie die Ausführung des Suspensionsauslasses 6, der sich stromabwärts im Flotationsbehälter 1 a befindet.

Die Breite des Flotationsbehälters 1 a wird in erster Linie von der erforderlichen Durchflussrate der Feststoffsuspension S durch die Flotationsvorrichtung abhängen, da bei breiterer Ausführung des Flotationsbehälters 1 a größere Mengen an Feststoffsuspension S bewältigt werden können.

Die Länge L des Flotationsbehälters 1 a hängt wiederum von der Verweildauer der Flotationsblasen in der Feststoffsuspension S ab, also von der Zeitdauer bis zum vollständigen Ausgasen der eingebrachten Luft aus der Feststoffsuspension S, sowie von der Fließgeschwindigkeit der Feststoffsuspension S im Flotationsbehälter 1 a. Der Flotationsbehälter 1 a ist somit ausreichend lang zu bauen, um ein vollständiges Ausgasen der eingebrachten Luft während des Durchflusses der Feststoff-suspension S zu ermöglichen. Die Strömungsgeschwindigkeit der Feststoff-suspension S im Flotationsbehälter 1 a hängt in erster Linie von der einfließenden Menge der Feststoffsuspension S pro Zeiteinheit, sowie von den Abmessungen des Flotationsbehälters 1 a ab. Sie kann aber auch durch zusätzliche bauliche Maßnahmen beeinflusst werden, etwa durch einen abgerundet ausgeführten Einlassbereich 13 des Flotationsbehälters 1 a.

Durch Passieren der Fallhöhe H und dem Auftreffen der herabfallenden Feststoffsuspension S auf die bereits im Flotationsbehälter 1 a befindlichen Feststoffsuspension S werden Flotationsblasen in die Suspension eingebracht. Wie bereits ausgeführt wurde, verfügen die Störstoffe, etwa Druckfarbenpartikel, über eine vergleichsweise höhere Hydrophobie, als die übrigen Feststoffe der Feststoffsuspension, etwa Faserstoffe, und neigen daher dazu, die Wasserphase zu verlassen und sich an den Flotationsblasen anzulagern. Jene Feststoff-Fraktionen mit höherer Hydrophilie verbleiben hingegen in der Wasserphase. Die Flotationsblasen steigen aufgrund der Auftriebskraft innerhalb der wässrigen Feststoffsuspension S entgegen dem Schwerefeld im Flotationsbehälter 1a auf, und bilden an der Oberfläche der Feststoffsuspension S eine störstoffbehaftete Schaumfraktion, die gesammelt und ausgetragen werden kann. Hierzu kann eine Sammeleinrichtung vorgesehen sein, die etwa zwei beidseits im oberen Bereich des Flotationsbehälters 1a angeordnete und entlang der Strömungsrichtung der Feststoffsuspension S verlaufende Sammelrinnen 8 umfasst. Des Weiteren ist es vorteilhaft, wenn im oberen Bereich des Flotationsbehälters 1 a im Bereich des Suspensionsauslasses 6 ein Verdrängkörper 7 vorgesehen ist (siehe Flotationsbehälter 1b in der Fig. 1 und Fig. 2), der den gebildeten Schaum in die seitlich angeordneten Sammelrinnen 8 drängt. Die Sammeleinrichtung kann aber auch als Schaumrinne 9 ausgeführt sein (siehe Flotationsbehälter 1 c in der Fig. 1), die im Bereich des Suspensionsauslasses 6 angeordnet ist und den Schaum in Strömungsrichtung aufnimmt. Zusätzlich kann des Weiteren eine Schaumniederschlagung 15 vorgesehen sein, bei der der gebildete Schaum etwa mithilfe von Spritzdüsen mittels Wasser niedergeschlagen wird.
In der Fig. 4 ist eine weitere Ausführungsform des Suspensionseinlasses 5 gezeigt, bei der die Leitrinne 12 in ihrer Neigung verstellbar ist. Damit kann etwa erreicht werden, dass die Feststoffsuspension S beim Einleiten aus dem Vorlagebehälter 2 oder einem vorhergehenden Flotationsbehälter 1 nicht einfach an der Behälterwand des betreffenden Flotationsbehälters 1 entlang rinnt, wie in der Fig. 3 gezeigt, sondern von der Behälterwand beabstandet im freien Fall auf die bereits im Behälter 1 befindliche Feststoffsuspension S auftrifft, wie in der Fig. 4 gezeigt. Dadurch wird der Lufteintrag entlang der in der Fig. 4 gezeigten Pfeile erhöht.

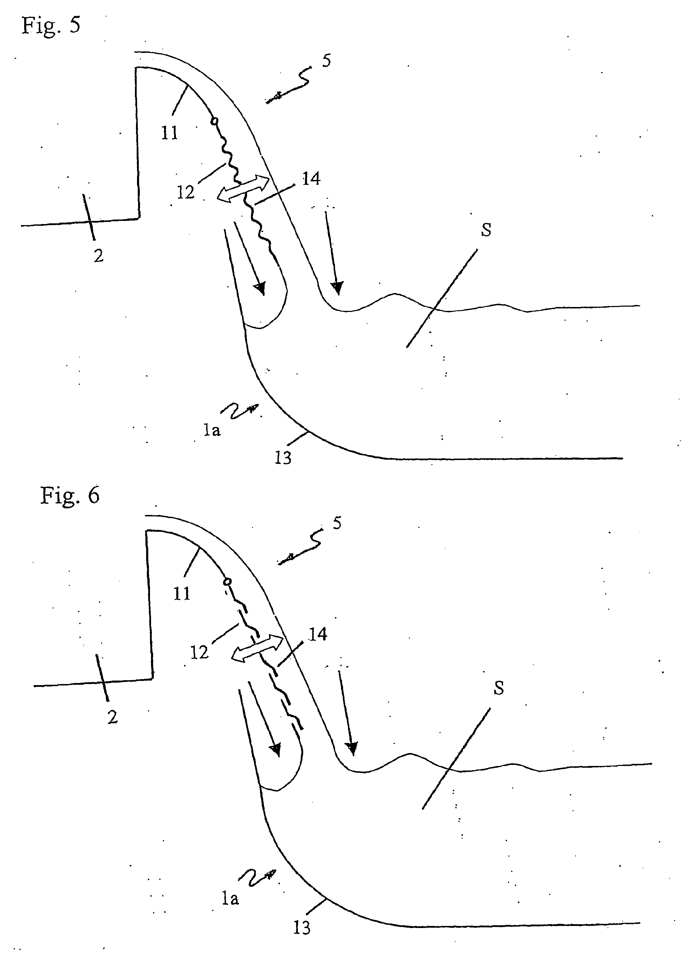

Weist die Leitrinne 12 des Weiteren Störelemente 14 zur Beeinträchtigung einer laminaren Strömung der Feststoffsuspension entlang der Leitrinne 12 auf, so wird der Lufteintrag weiter erhöht. Die Störelemente 14 können dabei etwa, wie in der Fig. 5 gezeigt, durch eine profilierte Oberfläche mit Erhebungen/Vertiefungen jeglicher geometrischer Formen der Leitrinne 12 gebildet werden, oder durch Durchbrüche in der Leitrinne 12, wie in der Fig. 6 dargestellt. Des Weiteren kann der Lufteintrag erhöht werden, indem die Leitrinne 12 auf ihrer dem Flotationsbehälter 1 zugewandten Seite eine gezackte Abschlusskante aufweist, oder eine rampenartige Ausführung, wie in der Fig. 5 und 6 ersichtlich.

Der Suspensionsauslass 6 kann durch ein Trennelement 10 im Flotationsbehälter 1 a von den stromaufwärts liegenden Bereichen im Flotationsbehälter 1a abgetrennt sein, um zu verhindern, dass störstoffbehafteter Schaum in den nächsten Flotationsbehälter 1 b mitgerissen wird. Das Trennelement 10 kann dabei als in die Feststoffsuspension S vertikal ragendes Trennblech ausgebildet sein (siehe Flotationsbehälter 1 a in der Fig. 1), oder auch zusätzlich einen stromaufwärts ragenden, waagrechten Schenkel aufweisen (siehe Flotationsbehälter 1b in der Fig. 1). Es ist aber auch denkbar, dass am Suspensionsauslass 6 Düsen angeordnet sind, mithilfe derer die Feststoffsuspension unter Druck und somit beschleunigt in die Fallhöhe H eingeleitet wird, wenngleich der dadurch verursachte Energiebedarf mit dem erreichten Nutzen eines erhöhten Lufteintrages abzuwägen ist.

Je nach Anwendungsfall kann es aber sein, dass der auf einer Fallhöhe H erzielte Lufteintrag noch nicht ausreichend ist, um einen erforderlichen Abtrennungsgrad der Störstoffe zu erreichen. Daher ist als Beispiel in der Fig. 1 eine Abfolge von drei Flotationsbehältern 1a, 1b, 1c vorgesehen, wobei bei den Flotationsbehältern 1b und 1 c der Suspensionseinlass 5 jeweils durch eine Fallhöhe H der Feststoffsuspension S aus dem Suspensionsauslass 6 des vorhergehenden Flotationsbehälters 1 a bzw. 1 b gebildet wird. Die Flotationsbehälter 1a, 1b, 1c usw. können dabei nebeneinander, oder auch übereinander angeordnet werden, wobei sich die einzelnen Flotationsbehälter 1a, 1b, 1c usw. jeweils auf unterschiedlicher Höhe befinden, um die erfindungsgemäß erforderliche Fallhöhe H der Feststoffsuspension S von einem Flotationsbehälter 1 in den nachfolgenden Flotationsbehälter 1 sicher zu stellen. Die Flotationsbehälter 1a, 1b, 1c usw. sind im Wesentlichen identisch ausgeführt, sodass die obigen Bemerkungen zum Flotationsbehälter 1 a auch für die Flotationsbehälter 1b und 1 c usw. gelten. Der letzte Flotationsbehälter 1 c weist schließlich einen Suspensionsauslass 6 auf, über den die von Störstoffen hinreichend gereinigte Feststoffsuspension S die erfindungsgemäße Flotationsvorrichtung verlässt. Je nach gefordertem Abtrennungsgrad und Anwendungsfall kann eine unterschiedliche Anzahl an Flotationsbehältern 1 vorgesehen sein.

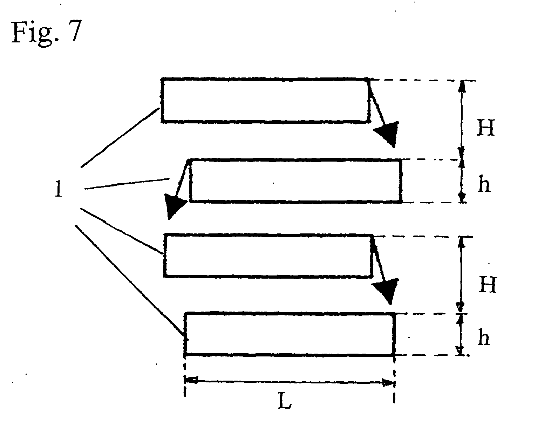

In der Fig. 7 ist schließlich eine weitere Ausführungsform der erfindungsgemäßen Flotationsvorrichtung 1 in stark schematischer Darstellung gezeigt, wobei die Flotationsbehälter 1 übereinander angeordnet sind. Diese Turmbauweise stellt eine stark platz sparende Variante dar, da eine geringere Grundfläche benötigt wird, als bei nebeneinander angeordneten Flotationsbehältern 1. Die Fallhöhe H der Feststoffsuspension S ist dabei einfach durch den vertikalen Abstand zweier unmittelbar übereinander liegender Flotationsbehälter 1 einstellbar. Die Fallrichtung der Feststoffsuspension S ist in der Fig. 7 mit den eingezeichneten Pfeilen angedeutet, wobei etwa vorgesehen sein kann, dass zur Aufnahme der herab fallenden Feststoffsuspension S zwei unmittelbar übereinander liegende Flotationsbehälter 1 geringfügig horizontal gegeneinander versetzt sind, wie in der Fig. 7 ersichtlich ist.

Mithilfe der Erfindung werden somit eine Flotationsvorrichtung sowie ein Flotationsverfahren verwirklicht, bei dem auf die Verwendung von Umwälzpumpen weitestgehend verzichtet werden kann. Dadurch wird der Energieverbrauch einer solchen Anlage entscheidend verringert. Des Weiteren ist der Wartungsaufwand und somit die Stillstandszeit der erfindungsgemäßen Flotationsanlage sehr gering, wobei mit vergleichsweise geringem Aufwand auch große Mengen der Feststoffsuspension S behandelt werden können.

## Patentansprüche

1. Flotationsvorrichtung zur Entfernung von Störstoffen aus einer im Normalfall wässrigen Feststoffsuspension (S) mittels Bildung einer störstoffbehafteten Schaumfraktion durch Gaseintrag mit einem Flotationsbehälter (1), der einen Suspensionseinlass (5), einen Suspensionsauslass (6), sowie eine Sammeleinrichtung für die Schaumfraktion aufweist, **dadurch gekennzeichnet, dass** der Suspensionseinlass (5) durch eine Fallhöhe (H) der Feststoffsuspension (S) in den Flotationsbehälter (1) gebildet wird.

2. Flotationsvorrichtung nach Anspruch 1, **dadurch gekennzeichnet, dass** eine Abfolge von zumindest zwei Flotationsbehältern (1) vorgesehen ist, wobei bei zumindest einem Flotationsbehälter (1 b) der Suspensionseinlass (5) durch eine Fallhöhe (H) der Feststoffsuspension (S) aus dem Suspensionsauslass (6) des vorhergehenden Flotationsbehälters (1 a) gebildet wird.

3. Flotationsvorrichtung nach Anspruch 1 oder 2, **dadurch gekennzeichnet, dass** im Bereich der Fallhöhe (H) eine Leiteinrichtung (12), beispielsweise Leitrinne, Leitrohr, Leitkanal o.dgl., zur Führung der Feststoffsuspension (S) in den Flotationsbehälter (1) vorgesehen ist.

4. Flotationsvorrichtung nach Anspruch 3, **dadurch gekennzeichnet, dass** die Neigung der Leiteinrichtung (12) verstellbar ist.

5. Flotationsvorrichtung nach Anspruch 3 oder 4, **dadurch gekennzeichnet, dass** die Leiteinrichtung (12) Störelemente (14) zur Beeinträchtigung einer laminaren Strömung der Feststoffsuspension (S) entlang der Leiteinrichtung (12) aufweist.

6. Flotationsvorrichtung nach Anspruch 5, **dadurch gekennzeichnet, dass** die Störelemente (14) durch eine profilierte Oberfläche mit Erhebungen/Vertiefungen jeglicher geometrischer Formen der Leiteinrichtung (12) gebildet werden.

7. Flotationsvorrichtung nach Anspruch 5, **dadurch gekennzeichnet, dass** die Störelemente (14) durch Durchbrüche in der Leiteinrichtung (12) gebildet werden.

8. Flotationsvorrichtung nach einem der Ansprüche 3 bis 7, **dadurch gekennzeichnet, dass** die Leiteinrichtung (12) auf ihrer dem Flotationsbehälter (1) zugewandten Seite eine gezackte Abschlusskante aufweist.

9. Flotationsvorrichtung nach einem der Ansprüche 1 bis 8, **dadurch gekennzeichnet, dass** die Sammeleinrichtung mindestens eine im oberen Bereich des Flotationsbehälters (1) angeordnete und entlang der Strömungsrichtung der Feststoffsuspension (S) vom Suspensionseinlass (5) zum Suspensionsauslass (6) verlaufende Sammelrinne (8) umfasst.

10. Flotationsvorrichtung nach Anspruch 9, **dadurch gekennzeichnet, dass** die Sammeleinrichtung zusätzlich mindestens einen im oberen Bereich des Flotationsbehälters (1) im Bereich des Suspensionsauslasses (6) angeordneten Verdrängkörper (7) umfasst.

11. Flotationsvorrichtung nach einem der Ansprüche 1 bis 10, **dadurch gekennzeichnet, dass** es sich bei der Feststoffsuspension (S) um eine Faserstoffsuspension handelt, und bei den Störstoffen um Druckfarbenpartikel.

12. Flotationsvorrichtung nach einem der Ansprüche 2 bis 11, **dadurch gekennzeichnet, dass** die Flotationsbehälter (1) der Abfolge von zumindest zwei Flotationsbehältern (1) turmartig übereinander angeordnet sind.

13. Flotationsverfahren zur Entfernung von Störstoffen aus einer wässrigen Feststoffsuspension (S), bei dem Flotationsblasen gebildet werden, die in einem Flotationsbehälter (1) entgegen dem Schwerefeld innerhalb der wässrigen Feststoffsuspension (S) aufsteigen, wobei die Störstoffe an die Flotationsblasen angelagert und in einer Schaumfraktion gesammelt und ausgetragen werden, **dadurch gekennzeichnet, dass** die Flotationsblasen durch eine Fallhöhe (H) der Feststoffsuspension (S) in den Flotationsbehälter (1) erzeugt werden.

14. Flotationsverfahren nach Anspruch 13, **dadurch gekennzeichnet, dass** die Feststoffsuspension (S) eine Abfolge von zumindest zwei Flotationsbehältern (1) durchläuft, wobei bei zumindest einem Flotationsbehälter (1 b) die Flotationsblasen durch eine Fallhöhe (H) der Feststoffsuspension (S) aus dem Suspensionsauslass (6) des vorhergehenden Flotationsbehälters (1a) erzeugt werden.

15. Flotationsverfahren nach Anspruch 13 oder 14, **dadurch gekennzeichnet, dass** es sich bei der Feststoffsuspension (S) um eine Faserstoffsuspension handelt, und bei den Störstoffen um Druckfarbenpartikel.
